# EUROPÄISCHE PATENTSCHRIFT

(11) **EP 3 349 888 B1**
(45) Veröffentlichungstag und Bekanntmachung des Hinweises auf die Patenterteilung: **19.06.2019**
(21) Anmeldenummer: 16774871.4
(22) Anmeldetag: 09.09.2016
(51) Int. Cl.: B01F 3/08, C08J 3/03, B01F 7/00, B01F 7/04

(54) **VERFAHREN ZUR KONTINUIERLICHEN HERSTELLUNG VON STABILEN SILICONEMULSIONEN**
PROCESS FOR CONTINUOUS PRODUCTION OF STABLE SILICONE EMULSIONS
PROCÉDÉ DE PRÉPARATION EN CONTINU D'ÉMULSIONS DE SILICONE STABLES

(30) Priorität: 14.09.2015 DE 102015217551
(43) Veröffentlichungstag der Anmeldung: 25.07.2018
(73) Patentinhaber: Wacker Chemie AG, 81737 München (DE)
(72) Erfinder: RAUTSCHEK, Holger, 01612 Nünchritz (DE); KRÖNER, Sebastian, 84489 Burghausen (DE); SCHRÖCK,Robert, 84503 Altötting (DE); SPÖRK, Christian, 84503 Altötting (DE)
(74) Vertreter: Deffner-Lehner, Maria
(86) Internationale Anmeldenummer: PCT/EP2016/071380
(87) Internationale Veröffentlichungsnummer: WO 2017/046017

(56) Entgegenhaltungen:
- EP-A2- 1 338 330
- EP-A2- 1 964 604
- DE-A1- 2 357 212
- DE-A1-102010 028 774
- GB-A- 2 106 407
- US-A- 5 563 189
- US-A1- 2007 203 263

## Beschreibung

Die Erfindung betrifft ein Verfahren zur kontinuierlichen Herstellung von wässrigen Siliconemulsionen, insbesondere von Emulsionen, die hochviskose Polyorganosiloxane enthalten.

Silicone sind vielfältig einsetzbar. Um die Anwendung und Dosierung insbesondere bei viskosen Produkten zu erleichtern, ist es für viele Anwendungen wünschenswert, dass die siliziumorganischen Verbindungen in verdünnter Form vorliegen. Die Verwendung von organischen Lösemitteln, wie Benzol oder Chlorkohlenwasserstoffen, für diesen Zweck ist zwar möglich, jedoch aus ökologischer und arbeitsmedizinischer Sicht nachteilig. Deshalb erfolgt der Einsatz meist in Form von wässrigen Emulsionen oder Dispersionen, üblicherweise als Ölin-Wasser-Emulsionen (O/W-Emulsionen), die mit Wasser verdünnbar sind. Als Ölphase werden dabei die mit Wasser nicht mischbaren siliziumorganischen Verbindungen verstanden, gegebenenfalls gelöst in organischen Lösemitteln.

Emulsionen, die Polysiloxane und andere siliziumorganische Verbindungen enthalten und Verfahren zu deren Herstellung sind bekannt (W. Noll, Chemistry und Technology of Silicones, Verlag Chemie Weinheim, S. 428-431, 1968).

Die Herstellung von Siliconemulsionen kann batchweise oder kontinuierlich erfolgen. Wichtig ist, dass das Emulgierverfahren stabile Emulsionen erzeugt und die Anpassung der Teilchengröße entsprechend den Anforderungen an die Anwendung gestattet. So werden z. B. für spezielle Anwendungen in der Kosmetik große Teilchengrößen bevorzugt (WO 03/092639 A1).

Gemäß US 7,619,010 B2 sind diskontinuierliche Verfahren oft mit einer Rückvermischung der Emulsion bzw. der hochviskosen Zwischenstufe durch eine Kreislauffahrweise beim Homogenisieren gekennzeichnet. Dies erhöht die Chargenlaufzeit und führt letztlich zu einem suboptimalen Mischergebnis.

Alternativ können, wenn hochviskose Zwischenstufen vermieden werden, Hochdruckhomogenisatoren eingesetzt werden, wobei abschließend zwischen zwei Kesseln wechselseitig homogenisiert wird, um die Rückvermischung, die bei einer Kreislauffahrweise auftritt, zu vermeiden (DD 133197). Damit ist eine gleichmäßigere Produktqualität möglich, allerdings ist dieses Verfahren auf niedrigviskose Silicone beschränkt und nicht sehr produktiv.

Eine kontinuierliche Herstellung ist produktiver und es kommt zu keiner Rückvermischung.

US 5 806 975 A beschreibt eine Apparatur und die Methode, um hochviskose Silicone in einem Extruder-artigen Gerät zu emulgieren. Extruder sind nicht nur aufwändig, sondern haben aufgrund der Bauweise einen hohen Platzbedarf, so hat der in diesem Patent verwendete Extruder eine Länge, die dem 10-fachen Durchmesser entspricht.

US 5 563 189 A beansprucht die 2-stufige, kontinuierliche Emulsionsherstellung, wobei in der ersten Stufe eine Emulsion mit hohem Festgehalt hergestellt wird, die dann in einem 2. Schergerät mit zusätzlichem Wasser auf die gewünschte Endkonzentration verdünnt wird. Die verwendeten Mischwerkzeuge, bei denen Rotor und Stator auf der gleichen axialen Position angeordnet sind und das Produkt den Rotor radial durchströmt, haben sehr kleine Spaltmaße und führen zu sehr hohen Scherraten. Das ist nicht für alle Anwendungen von Vorteil insbesondere bei scherempfindlichen Produkten oder wenn gezielt größerer Partikel erzeugt werden sollen.

WO 2002/42360 A2 beschreibt die kontinuierliche Herstellung von Emulsionen mittels eines oder mehreren scherenden Mixern, wobei das Siloxan, der Emulgator und das Wasser zur Ausbildung einer steifen Phase dem Mixer durch eine Leitung zugeführt wird und der Druck am Einlass des Mixers auf 20% konstant gehalten wird, um die Teilchengröße zu steuern. Als hochscherende Mischer werden Kolloidmühlen z.B. der Marke Bematek genannt, also Mischer bei denen Rotor und Stator an der gleichen axialen Position vom Produkt durch einen engen Spalt radial durchströmt werden. Auch dieses Verfahren ist deshalb auf die Erzielung kleiner Teilchengrößen ausgerichtet und zur Herstellung von Produkten mit größeren Teilchengrößen oder zur Emulgierung von scherempfindlichen Produkten nicht gut geeignet.

US 2007/0203263 A1 beschreibt ein Verfahren bei dem mehrere hochscherende Mischer in Reihe kombiniert werden. Als Mischer werden vorzugsweise Rotor-Stator Mischer eingesetzt.
Nach dem Stand der Technik sind für die kontinuierliche Emulsionsherstellung Rotor-Stator Mischer, insbesondere Kolloidmühlen und Zahnkranzdispergiermaschinen (siehe Köhler, K.; Schuchmann, H. P. (Hrsg.), Emulgiertechnik, Behr's Verlag, Hamburg, 3. Auflage 2012, Kapitel IX.2 "Aufbau und Funktionsweise typischer Rotor-Stator und Rotor-Rotor-Emulgiermaschinen", S. 188-192), also Mischer bei denen Rotor und Stator an der gleichen axialen Position vom Produkt durch einen engen Spalt radial durchströmt werden, geeignet.
Die in US 2007/0203263 A1 verwendeten hochscherenden Mischer haben eine eigene drehzahlabhängige Förderleistung (Prinzip Kreiselpumpe), wodurch der Eintrag der Scherenergie gleichzeitig den Durchsatz und die Druckverhältnisse beeinflusst und nicht völlig von diesen Parametern entkoppelt werden kann.

Die Emulgierung wird durch die Drücke und Temperaturen, die nach diesen Mischern gemessen werden, gesteuert. Neben der Problematik der Herstellung von Emulsionen mit gezielt einstellbaren höheren Teilchengrößen oder mit scherempfindlichen Produkten ist die Kombination von mehreren Mischern mit voneinander unabhängigen Antrieben in Reihe, die Abstimmung der Durchsätze und die Steuerung nach vielen Parametern sehr aufwändig und damit störanfällig. Die bei diesem Verfahren erhaltenen Teilchengrößen sind generell kleiner als 1µm.

In EP 1 607 428 B1 wird u.a. vorgeschlagen eine kontinuierliche Emulgierung durch eine Kombination von in Reihe geschalteten statischen Mischern durchzuführen. Dabei treten hohe Druckverluste in den statischen Mischern auf, die mit hohem Energieaufwand kompensiert werden müssen.

Es besteht daher die Aufgabe ein kontinuierliches Verfahren zur Herstellung von Siliconemulsionen bereitzustellen, das für ein breites Produktspektrum einsetzbar ist, eine genaue Steuerung der Teilchengröße gestattet, sich durch geringe Druckverluste auszeichnet und damit besonders energieeffizient ist.
Diese Aufgabe wird durch die Erfindung gelöst.

Gegenstand der Erfindung ist ein kontinuierliches Verfahren zur Herstellung von Emulsionen, bei dem Polyorganosiloxane (A), Emulgatoren (B), Wasser (C) und ggf. weitere Komponenten (D), die üblicherweise in Siliconemulsionen enthalten sind, kontinuierlich in einen Mischer zugeführt und darin gemischt werden, wobei eine Emulsion gebildet wird, die kontinuierlich aus dem Mischer abgeführt wird, dadurch gekennzeichnet, dass der Mischer ein zylindrischer Mischer ist, der mindestens zwei Rotor-Stator-Mischelemente aufweist, die axial durchströmt werden und bei dem die Rotor- und Stator-Elemente jeweils axial versetzt angeordnet sind, und der mindestens eine Dosierstelle vor den Mischelementen des Mischers und mindestens eine weitere Dosierstelle entlang des Mischers zwischen den Mischelementen enthält,
wobei die Polyorganosiloxane (A) ggf. als Vormischung mit einer Teilmenge einer Komponente ausgewählt aus Emulgatoren (B), Wasser (C), weiteren Komponenten (D) und deren Mischungen, an einer Dosierstelle am Eingang des Mischers zugeführt werden und Emulgatoren (B) und Wasser (C) und ggf. Teilmengen von Polyorganosiloxanen (A) und ggf. weitere Komponenten (D) jeweils unabhängig voneinander, getrennt oder als Vormischung an einer Dosierstelle vor den Mischelementen und/oder an einer oder mehreren Dosierstellen zwischen den Mischelementen entlang des Mischers zugeführt werden, wobei die Zugabe der Gesamtmenge der Komponenten (A) bis (D) jeweils unabhängig voneinander über eine Dosierstelle oder verteilt über mehrere Dosierstellen erfolgt,
wobei die mittlere Partikelgröße D(50) der Emulsionen größer 1 µm beträgt und die mittlere Partikelgröße D(50) der Emulsionen durch die Aufteilung der Anteile an Komponenten (A) bis (D), vorzugsweise (B) und (C), bevorzugt (C), die an den weiteren Dosierstellen zwischen den Mischelementen entlang des Mischers eingetragen werden, gesteuert wird.

Vorzugsweise hat der Mischer neben der Dosierung für das Polyorganosiloxan (A) zwei weitere Dosierstellen für Komponenten (A), (B), (C) und ggf. (D). Dabei können die Komponenten (B), (C) und ggf. (D) auch als Vormischung dosiert werden. Die Mischung eines Teil der Komponenten (B), (C) und ggf. (D) mit dem Polyorganosiloxan (A) vor dem Mischer ist möglich. Die Zahl der zusätzlichen Dosierstellen zur Nachdosierung der Komponenten (A), (B), (C) und ggf. (D) ist nicht begrenzt. Aus Kostengründen und im Sinne einer einfachen und damit effizienten Prozesssteuerung sind neben einer Dosierstelle vor den Mischelementen des Mischers 1 bis 10, insbesondere 1 bis 5, zusätzliche Dosierstellen entlang des Mischers bevorzugt.
Vorzugsweise werden bei dem erfindungsgemäßen Verfahren die Polyorganosiloxane (A) am Eingang des Mischers zugeführt und die Zugabe der Gesamtmenge an Emulgatoren (B) und Wasser (C) erfolgt jeweils unabhängig voneinander, getrennt oder als Vormischung, an einer Dosierstelle vor den Mischelementen des Mischers oder aufgeteilt über die Dosierstellen vor und zwischen den Mischelementen des Mischers.

Bevorzugt werden bei dem erfindungsgemäßen Verfahren die Polyorganosiloxane (A) am Eingang des Mischers zugeführt, die Emulgatoren (B) an einer Dosierstelle vor den Mischelementen zugegeben und die Zugabe der Gesamtmenge an Wasser erfolgt an einer Dosierstelle vor den Mischelementen oder aufgeteilt über die Dosierstellen vor und zwischen den Mischelementen.

Besonders bevorzugt werden Emulgatoren (B) und Wasser (C) als Vormischung an einer Dosierstelle vor den Mischelementen zugegeben. Insbesondere wird dann weiteres Wasser (C) an einer oder mehreren Dosierstellen zwischen den Mischelementen zugegeben.

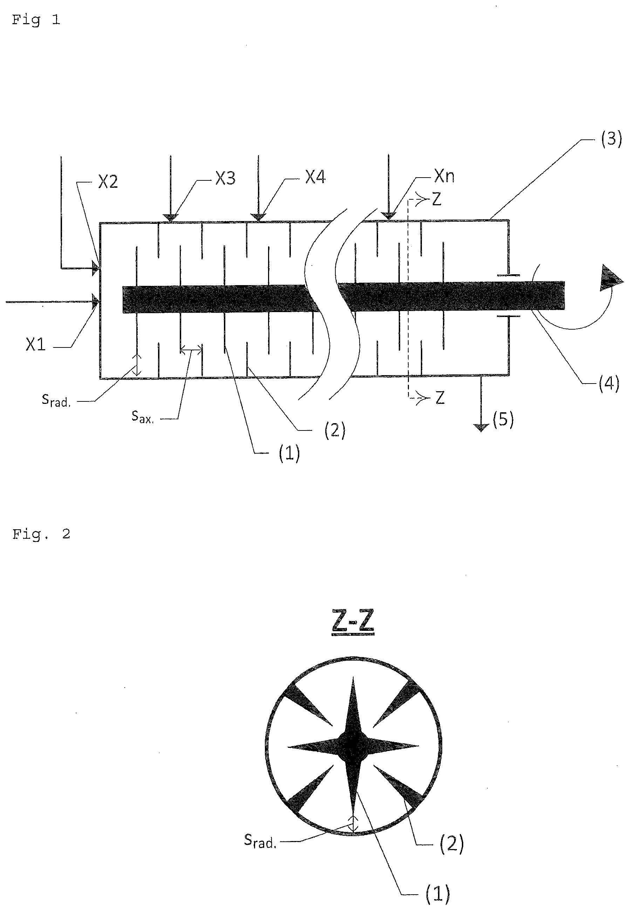

Anhand Fig. 1 wird das Verfahren beispielhaft erläutert. Die Komponenten A, B, C und ggf. D werden über Dosierstellen X1 bis Xn dem Mischer zugeführt, unabhängig voneinander, getrennt oder als Vormischung entweder als Gesamtmenge an einer Dosierstelle oder aufgeteilt über mehrere Dosierstellen. Diese können vor und/oder zwischen den Mischelementen platziert sein. Der Mischer, bestehend aus einem zylindrischen Gehäuse (3) mit feststehenden Statorelementen (2) sowie einer rotierenden Welle (4) mit aufgebrachten Rotorelementen (1) und wird vom Produkthauptstrom axial durchströmt. Die dabei auftretende Scher- und Dehnfelder führen zur Dispergierung des Polyorganosiloxans (A) in der kontinuierlichen Phase. Das Produkt wird über den Auslass (5) kontinuierlich abgezogen. Rotor- und Statorelemente sind jeweils axial um das Spaltmaß (sₐₓ.) versetzt. Das radiale Spaltmaß (s_{rad.}) ist definiert als der Abstand des äußersten Rotorumfangs zum zylindrischen Gehäuse des Mischers. Die Spaltmaße können von Mischelement zu Mischelement variieren. Verschiedene Geometrien für die Rotoren und Statoren sind möglich, insbesondere die Verwendung von Scheiben, Dreiecksnocken, Vierecknocken, zylindrischen Stiften oder Nadeln sowie Kombinationen daraus liegen nahe.
Die Schnittdarstellung gemäß Fig. 2 stellt lediglich eine beispielhafte Rotor-Stator-Geometrie dar.
Die zylindrische Mischerbauform ermöglicht die Nachdosierung an verschiedenen axialen Positionen und eröffnet so eine wesentliche zusätzliche Steuergröße für die Emulgierung. Beim Einsatz typischer Zahnkranzdispergierer oder Hochdruckhomogenisatoren ist dies technisch nicht möglich.

Vorzugsweise enthält der Mischer 3 bis 60 besonders bevorzugt 5 bis 40 Rotor-Stator-Mischelementepaare.

Der axiale Spalt zwischen Rotor und Stator (sₐₓ.) der Mischelemente beträgt vorzugsweise 0,1 bis 15 mm besonders bevorzugt 1 bis 5 mm. Unterschiedliche Spaltmaße zwischen den Elementen sind möglich.

Der radiale Spalt zwischen dem Rotor der Mischelemente und dem Gehäuse des Mischers (s_{rad}.) beträgt vorzugsweise 0,1 bis 10 mm besonders bevorzugt 0,5 bis 5 mm. Unterschiedliche Spaltmaße zwischen den Elementen sind möglich.

Die Geometrie der einzelnen Rotor-Stator-Mischelemente und die Spaltmaße können gleich aber auch verschieden sein, so dass innerhalb des Mischers trotz gleicher Umdrehungszahl unterschiedliche Mischintensitäten realisiert werden können. Grundsätzlich ist es auch möglich, dass alle oder einzelne Mischelemente nur aus dem Rotor bestehen. Damit ist das Verfahren sehr flexibel an die Anforderungen anpassbar. Vorzugsweise beträgt der Anteil der frei durchströmbaren Querschnittsfläche der Rotoren mindestens 30%, bevorzugt mindestens 50%, und der Anteil der frei durchströmbaren Querschnittsfläche der Statoren mindestens 40%, bevorzugt mindestens 60%.

Die im erfindungsgemäßen Verfahren eingesetzten Mischer haben keine bzw. nur minimale eigene Förderwirkung, so dass die Drehzahl der Rotorelemente also der Eintrag der Scherenergie unabhängig vom Durchsatz und von den Druckverhältnissen geregelt werden kann, wodurch eine besonders flexible Steuerung der Emulgierprozesse im Hinblick auf die gewünschten Produkteigenschaften möglich ist.

Vorzugsweise sind nach jeder Dosierstelle 2 bis 10, insbesondere 2 bis 5, Rotor-Stator Mischelemente angebracht bevor die nächste Dosierstelle oder der Mischerausgang kommt. Die Aufteilung eines Seitendosierstroms auf mehrere auf dem Umfang verteilte Injektionspunkte ist möglich. Auch die getrennte Nachdosierung der Komponenten durch auf dem Umfang versetzte Injektionspunkte an ähnlicher axialer Position ist möglich.

Die zusätzlichen Dosierstellen, können tangential oder radial am Mischer angebaut sein.

Die Dosierung der Komponenten erfolgt über Pumpen, die auch den Druckverlust im Mischer überwinden. Die Pumpen werden vorzugsweise über Ihre Drehzahl geregelt, um definierte Mengenströme der Komponenten sicher zu stellen.

Für das vorzugsweise hochviskose Polyorganosiloxan (A) werden dabei vorzugsweise Verdrängerpumpen, insbesondere Zahnradpumpen eingesetzt. Die Komponenten (B) und (C) und ggf. (D) oder auch vorab hergestellten Mischungen aus diesen Komponenten werden vorzugsweise über Exzenterschneckenpumpen dosiert, die einen gleichmäßigen Förderstrom bei geringem Einfluss der Viskosität des Fördermediums auf den Volumenstrom gewährleisten.

Der Druckverlust bei dem erfindungsgemäßen Verfahren ist vorzugsweise kleiner als 10 bar, bevorzugt kleiner als 5 bar, besonders bevorzugt kleiner als 2 bar.

Der zylindrische Mischer hat vorzugsweise ein Verhältnis von Länge zum Durchmesser von höchstens 10, besonders bevorzugt von höchstens 6, und von vorzugsweise mindestens 1, bevorzugt mindestens 2.

Die Rotationsgeschwindigkeit der Rotoren im Mischer beträgt vorzugsweise 10 bis 5.000 Umdrehungen/min, besonders bevorzugt 50 bis 3.000 Umdrehungen/min.

Die Umfangsgeschwindigkeit der Außenseite der Rotoren beträgt vorzugsweise 0,1 bis 30 m/s, besonders bevorzugt 0,5 bis 15 m/s.

Die Verweilzeit der Komponente A im Mischer beträgt vorzugsweise 0,25 min bis 20 min, besonders bevorzugt 0,5 min bis 5 min.

Der spezifische Energiereintrag beim Mischprozess beträgt vorzugsweise 1 bis 500 kJ/kg, bevorzugt 5 bis 200 kJ/kg.

Die Raum-Zeit Ausbeute des erfindungsgemäßen Mischverfahrens beträgt vorzugsweise mindestens 3 kg/l*h, bevorzugt mindestens 12 kg/l*h.

Grundsätzlich ist es auch möglich, mehrere Mischer in Reihe zu kombinieren.

Als Polyorganosiloxan (A) kann ein Polyorganosiloxan oder eine Mischung aus mehreren Polyorganosiloxanen verwendet werden.

In dem erfindungsgemäßen Verfahren können alle Polyorganosiloxane als Polyorganosiloxan (A) sowie deren Lösungen oder Dispersionen eingesetzt werden. Beispiele sind lineare Polyorganosiloxane und Siliconharze. Unter Siliconharzen versteht man Produkte die nicht nur mono- und difunktionelle Siloxaneinheiten enthalten sondern auch tri- und tetrafunktionelle Siloxaneinheiten aufweisen.

Das im erfindungsgemäßen Verfahren eingesetzten Polyorganosiloxane (A) bzw. die Mischungen aus Polyorganosiloxanen (A) sind vorzugsweise bei 25°C flüssig und weisen vorzugsweise Viskositäten, gemessen nach DIN ISO 53019 von 10 bis 50.000.000 mPa·s, besonders bevorzugt von 10.000 bis 1.000.000 mPa·s auf.

Polyorganosiloxane (A) besteht aus Einheiten der allgemeinen Formel

R²ₐ(R¹O)_{b}SiO_{(4-a-b)/2} (I),

worin
R² gleich oder verschieden sein kann und einen einwertigen, gegebenenfalls substituierten Kohlenwasserstoffrest mit 1 bis 30 Kohlenstoffatomen oder Wasserstoffatom bedeutet,
R¹ gleich oder verschieden sein kann und Wasserstoffatom oder einen einwertigen, gegebenenfalls substituierten Kohlenwasserstoffrest bedeutet,
a 0, 1, 2 oder 3 ist und
b 0, 1, 2 oder 3 ist,
mit der Maßgabe, dass die Summe a+b kleiner oder gleich 3 ist.

Bei den Polyorganosiloxanen (A), welche in dem erfindungsgemäßen Verfahren verwendet werden, handelt es sich vorzugsweise um solche enthaltend 5 bis 10000 Einheiten der Formel (I), besonders bevorzugt um solche aus Einheiten der Formel (I) mit einem durchschnittlichen Wert von a von 1,90 bis 2,3 und einem durchschnittlichen Wert von b von 0 bis 0,2.

Beispiele für Kohlenwasserstoffreste R² sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest ; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R² sind mit Halogen-, Cyano-, Glycidoxy-, Polyalkylenglycol- oder Aminogruppen substituierte Kohlenwasserstoffreste, wie beispielsweise Trifluorpropyl-, Cyanoethyl-, Glycidoxypropyl-, Polyalkylenglycolpropyl-, und Aminogruppen tragende Kohlenwasserstoffreste.

Beispiele für mit Aminogruppen substituierte Reste R² sind;

H₂N(CH₂)₂NH(CH₂)₃-

H₂N(CH₂)₂-

H₃CNH(CH₂)₃-

H₂N(CH₂)₄-

H₂N(CH₂)₅-

H(NHCH₂CH₂)₃-

C₄H₉NH(CH₂)₂NH(CH₂)₂-

und

cyclo-C₆H₁₁NH(CH₂)₃- ,

wobei

H₂N(CH₂)₃ -

und

H₂N(CH₂)₂NH(CH₂)₃-

besonders bevorzugt sind.

Bevorzugt hat in den Einheiten der Formel (I) maximal 1 Rest R² die Bedeutung von Wasserstoffatom,

Bevorzugt handelt es sich bei Rest R² um Kohlenwasserstoffreste mit 1 bis 18 Kohlenstoffatomen, besonders bevorzugt um den Methyl- oder den Phenylrest, wobei insbesondere mehr als 80 Mol-% der Reste R² im Siloxan (A) die Bedeutung von Methylreste und weniger als 20 Mol-% die Bedeutung von Aminopropyl- oder Aminoethylaminopropylresten haben.

Beispiele für Reste R¹ sind die für Reste R² angegebenen Beispiele.

Bevorzugt handelt es sich bei Rest R¹ um Wasserstoffatom und Kohlenwasserstoffreste mit 1 bis 4 Kohlenstoffatomen, besonders bevorzugt um Wasserstoffatom.

In Formel (I) hat die Summe a+b einen Wert von bevorzugt durchschnittlich 1,5 bis 2,4, besonders bevorzugt durchschnittlich 1,9 bis 2,3, insbesondere durchschnittlich 1,95 bis 2,05.

Beispiele für die im erfindungsgemäßen Verfahren eingesetzten Polyorganosiloxane (A) sind mit Aminopropyldimethylsiloxy-, Aminoethylaminopropyldimethylsiloxy-, Vinyldimethylsiloxy-, Trimethylsiloxy-, Dimethylalkoxysiloxygruppen- oder Dimethylhydroxygruppen terminierte Polydiorganosiloxane, insbesondere Polydimethylsiloxane, die seitenständige Aminopropyl-, Aminoethylaminopropyl oder Carboxyalklygruppen enthalten.

Bevorzugt als Polyorganosiloxane (A) sind solche der Formel

R²_{3-c}(R¹O)_{c}SiO(R²SiO)ₚSi(OR¹)_{c}R²_{3-c} (II),

wobei R¹ und R² die oben dafür angegebene Bedeutung haben,
c 0, 1 oder 2, vorzugsweise 0 oder 1, ist und
p 1 bis 100 000, vorzugsweise 5 bis 10 000, ist.

Beispiele für die im erfindungsgemäßen Verfahren eingesetzten Polyorganosiloxane (A) sind:

(CH₃)₃Si-O-[Si(CH₃)₂-O-]ₙ-Si(CH₃)₃

HO(CH₃)₂Si-O-[Si(CH₃)₂-O-]ₙ-Si(CH₃)₂OH

(CH₃)₃Si-O-[Si(CH₃)₂-O-]ₙ-[Si(CH₃)R-O-]ₘ-Si(CH₃)₃

HO(CH₃)₂Si-O-[Si(CH₃)₂-O-]ₙ-[Si(CH₃)R-O-]ₘ-Si(CH₃)₂OH

CH₃O(CH₃)₂Si-O-[Si(CH₃)₂-O-]ₙ-[Si(CH₃)R-O-]ₘ-Si(CH₃)₂OCH₃

C₂H₅O(CH₃)₂Si-O-[Si(CH₃)₂-O-]ₙ-[Si(CH₃)R-O-]ₘ-Si(CH₃)₂OC₂H₅ ,

wobei n beispielsweise einen Wert von 50 - 5000 annehmen kann, m einen Wert von 1 bis 100 und R beispielsweise ein Rest der Formel -C₃H₆NH₂, -C₃H₆NH-C₂H₄NH₂ oder -C₁₀H₂₀COOH ist.

Wenn als Komponente (A) ein reaktives Polyorganosiloxan, z.B. mit Vinyl- oder OH-Endgruppen verwendet wird, dann kann in der Emulsion z.B. eine Kettenverlängerung, Polykondensation oder in Gegenwart geeigneter Reaktionspartner eine Vernetzung erfolgen. Derartige Reaktionen sind dem Fachmann bekannt und führen dazu, dass die erfindungsgemäß hergestellten Emulsionen Polyorganosiloxane mit Viskositäten größer als 1.000.000 mPas (25°C) oder vernetzte Polyorganosiloxanelastomere enthalten.

Die Herstellung der im erfindungsgemäßen Verfahren eingesetzten Polyorganosiloxane (A) erfolgt nach bekannten Verfahren. Es ist bevorzugt, dass wenn die Herstellung der Polyorganosiloxane (A) kontinuierlich erfolgt, das erfindungsgemäße Verfahren direkt im Anschluss durchgeführt wird. Das heißt, dass der Eintrag der Polyorganosiloxane (A) in den axial durchströmten Mischer vorzugsweise direkt aus dem Ausgang eines Dünnschichtverdampfers, der zur Entflüchtigung der Polymere oder zur Polymerherstellung (z.B. nach US 5,561,209 A) verwendet wird, oder direkt aus dem Ausgangs eines zur Polymerherstellung verwendeten Kneters oder Extruders (z.B. wie in DE 3914912 C2 beschrieben) erfolgt.

Emulgatoren (B) werden in Mengen von bevorzugt 1 bis 60 Gewichtsteilen, besonders bevorzugt 5 bis 30 Gewichtsteilen, bezogen auf 100 Gewichtsteile Komponente (A) eingesetzt.

Es kann eine Art an Emulgator (B) eingesetzt werden, oder mindestens zwei verschiedene Emulgatoren. Der Einsatz von mindestens zwei verschieden Emulgatoren ist bevorzugt.

Es können im erfindungsgemäßen Verfahren alle bekannten Arten von Emulgatoren eingesetzt werden. Das sind z.B. anionische, kationische, nicht-ionische und amphotere Emulgatoren, sowie Schutzkolloide und Partikel, die die Emulsionen stabilisieren.

Bei der Komponente (B) der Emulsionen handelt es sich vorzugsweise um kommerziell verfügbare Emulgatoren, wie z.B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Prozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 8 bis 22 Kohlenstoffatomen mit bis zu 95 Prozent Ethylenoxidgehalt; ionische Emulgatoren, wie Alkylarylsulfonate mit 6 bis 20 Kohlenstoffatomen in der Alkylgruppe; Fettsäureseifen mit 8 bis 22 Kohlenstoffatomen; Fettsulfate mit 8 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Emulgatoren, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; alkoxylierte Silicon-Emulgatoren mit Ethylenoxid- und oder Propylenoxideinheiten; Alkylphosphate und deren Salze.

Wie auf dem Gebiet der Emulgatoren wohl bekannt, können die Gegenionen im Falle von anionischen Emulgatoren Alkalimetalle, Ammoniak oder substituierte Amine, wie Trimethylamin oder Triethanolamin, sein. Normalerweise sind Ammonium-, Natrium- und Kaliumionen bevorzugt. Im Falle von kationische Emulgatoren ist das Gegenion ein Halogenid, Sulfat oder Methylsulfat. Chloride sind die zumeist industriell verfügbaren Verbindungen.

Beispiele für Emulgatoren sind Decylaminobetain; Cocoamidsulfobetain; Oleylamidobetain; Cocoimidazolin; Cocosulfoimidazolin; Cetylimidazolin; 1-Hydroxyethyl-2-heptadecenyl-imidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium- oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; Trimethylstearylammoniummethosulfat; Natriumlaurat; Natrium- oder Kaliummyristat, Di-n-butylphosphat, Di-n-hexylphosphat, Mono-n-octylphosphat, Di-n-octylphosphat, Mono-2-ethylhexylphosphat, Di-2-ethylhexylphosphat, Mono-i-nonylphosphat, Di-i-nonyl¬phosphat, Mono-n-decylphosphat, n-Octyl-n-Decylphosphat, Di-n-decylphosphat, Monoisotridecylphosphat, Di-n-nonylphenylphosphat, Monooleylphosphat und Distearylphosphat, Mono-n octylphosphat, Di-n-octylphosphat, Mono-n-decylphosphat, n-Octyl-n-Decylphosphat, Di-n-decylphosphat, ethoxyliertes Rizinusöl mit 200 Ethylenglycoleinheiten, ethoxyliertes Rizinusöl mit 40 Ethylenglycoleinheiten und ethoxyliertes hydriertes Rizinusöl mit 200 Ethylenglycoleinheiten, Polyoxyethylen(20)Sorbitanstearat (Polysorbat 60), Polyoxyethylen(20)Sorbitantristearat (Polysorbat 65), Polyoxyethylen(20)Sorbitanoleat (Polysorbat 80) und Polyoxyethylen(20)Sorbitanlaurat (Polysorbat 20), Verbindungen der Formel (IV) i-C₁₃H₂₇-O-(CH₂CH₂O)₁₀-H, C₁₆H₃₃-O-(CH₂CH₂O)₄-H, C₁₆H₃₃-O-(CH₂CH₂O)₂₀-H, C₁₆H₃₃-O-(CH₂CH₂O)₂₅-H, C₁₈H₃₇-O-(CH₂CH₂O)₄-H, C₁₈H₃₇-O-(CH₂CH₂O)₂₀-H, C₁₈H₃₇-O-(CH₂CH₂O)₂₅-H, C₁₈H₃₅-O-(CH₂CH₂O)₂₀-H, C₁₂H₂₃-O-(CH₂CH₂O)₄-H, C₁₂H₂₃-O-(CH₂CH₂O)₂₃-H, C₁₆H₃₃-CH₂-C(O)-O-(CH₂CH₂O)₂₀-H, C₁₆H₃₃-CH₂-C(O)-O-(CH₂CH₂O)₃₀-H, C₁₆H₃₃-CH₂-C(O)-O-(CH₂CH₂O)₄₀-H und C₁₆H₃₃-CH₂-C(O)-O-(CH₂CH₂O)₁₀₀-H.

Die Komponente (B) kann aus einem Emulgator oder aus einem Gemisch zweier oder mehrerer Emulgatoren bestehen.

In einer bevorzugten Ausführungsform besteht Komponente (B) zu mehr als 50 Gew. % besonders bevorzugt zu mehr als 75 Gew. % aus nicht-ionischen Emulgatoren.

Vorzugsweise haben die in der erfindungsgemäßen Emulsion enthaltenen nichtionischen Emulgatoren (B) einen durchschnittlichen HLB-Wert von 10 bis 17, bevorzugt 11 bis 15. Der HLB-Wert ist Ausdruck des Gleichgewichts zwischen hydrophilen und hydrophoben Gruppen eines Emulgators. Die Definition des HLB-Werts sowie Verfahren zu deren Ermittlung sind dem Fachmann bekannt und z.B. in Journal of Colloid and Interface Science 298 (2006) 441-450 sowie der dort zitierten Literatur insbesondere Zitat [23] beschrieben.

Als emulgierende Schutzkolloide können z. B. Polyvinylalkohole sowie Celluloseether, wie Methylcellulose, Hydroxyethylcellulose oder Carboxymethylcellulose eingesetzt werden.

Als Partikel zur Stabilisierung von Emulsionen eignen sich beispielsweise partiell hydrophobierte hochdisperse Kieselsäuren.

Zusätzlich zu den Komponenten (A), (B) und (C) können alle weiteren Stoffe (D), die üblicherweise Siliconemulsionen zugesetzt werden, eingesetzt werden. Beispiele für weitere Komponenten (D) sind weitere Siloxane, die verschieden sind zu Komponente (A), z.B. Polyethersiloxane; Silane insbesondere Alkoxysilane; Verdicker; Schutzkolloide; Füllstoffe; Additive, wie beispielsweise Konservierungsmittel, Desinfektionsmittel, Netzmittel, Korrosionsinhibitoren, Farbstoffe und Duftstoffe, und deren Mischungen.

Falls weitere Siloxane, die von Komponente (A) verschieden sind, eingesetzt werden, werden sie vorzugsweise in Mengen von 0,1 bis 1 Gewichtsteilen, bezogen auf 100 Gewichtsteile Komponente (A), eingesetzt.
Falls Silane eingesetzt werden, werden sie vorzugsweise in Mengen von 0,1 bis 50 Gewichtsteilen, bezogen auf 100 Gewichtsteile Komponente (A), eingesetzt.

Beispiele für Füllstoffe sind hochdisperse Kieselsäuren, die vorzugsweise mit dem Polyorganosiloxan (A) vor der Ausführung des erfindungsgemäßen Verfahrens vermischt werden. Diese Kieselsäuren sind vorzugsweise hydrophob, wobei diese im Polyorganosiloxan in situ hydrophobiert oder vorbehandelt sein können. Es kann auch eine Mischung aus verschiedenen Füllstoffen eingesetzt werden. Derartige Mischungen aus Polyorganosiloxanen sind z.B. als Entschäumerzusammensetzungen bekannt (z.B. US 8,530,401 B2).
Falls Füllstoffe eingesetzt werden, werden sie vorzugsweise in Mengen von 0,1 bis 20 Gewichtsteilen, bezogen auf 100 Gewichtsteile Komponente (A), eingesetzt.

Falls bei dem erfindungsgemäßen Verfahren zusätzlich zum Emulgator (B) als Komponente (D) Verdicker bzw. Schutzkolloide eingesetzt werden, handelt es sich bevorzugt um Acrylsäurecopolymere, Celluloseether und Polysacharide, wie z.B. Xanthan Gum.

Falls Verdicker und/oder Schutzkolloide (D) eingesetzt werden, handelt es sich um Mengen von bevorzugt 0,01 bis 2 Gewichtsteilen, bezogen auf 100 Gewichtsteile Komponente (A).

Beispiele für Additive (D), die erfindungsgemäß eingesetzt werden können, sind z.B. dem Fachmann bekannte Konservierungsmittel, Färb- oder Duftstoffe, insbesondere Konservierungsmittel, wie Methylisothiozolinon, Chlormethylisothiazolinon, Benzylisothiazolinon, Phenoxyethanol, Methylparaben, Ethylparaben, Propylparaben, Butylparaben, Isobutylparaben, Alkalibenzoate, Alkalisorbate, Iodopropynylbutylcarbamat, Benzylalkohol und 2-Brom-2-nitropropan-1,3-diol.

Falls Additive (D) eingesetzt werden, handelt es sich um Mengen von bevorzugt 0,0005 bis 2 Gewichtsteilen, bezogen auf 100 Gewichtsteile Komponente (A). Im erfindungsgemäßen Verfahren werden bevorzugt Additive (D), insbesondere Konservierungsmittel, eingesetzt.

Das erfindungsgemäße Verfahren ermöglicht die Herstellung von Emulsionen in einem weiten Bereich von Teilchengrößen, z.B. einem Bereich von 5nm bis zu 500µm D(50) bezogen auf den D(50) Wert der Volumenverteilung.

In dem Verfahren werden Partikelgrößen (Mittelwert der Volumenverteilung) größer 1 µm angestrebt, insbesondere Partikelgrößen von 5 bis 50 µm, wobei sich diese Angaben auf den D(50) Wert der Volumenverteilung gemessen nach dem Prinzip der Fraunhofer-Beugung (entsprechend ISO 13320) beziehen. Als Parameter für die Messung wird ein sphärisches Modell angenommen mit einem Brechungsindex der kontinuierlichen Phase von 1,33, einem Brechungsindex der dispersen Phase von 1,39 und einer Absorption von 0,01.

Die erfindungsgemäß hergestellten Emulsionen haben einen Gehalt an nichtflüchtigen Anteilen gemessen nach DIN EN ISO 3251 von bevorzugt 1 bis 80 Gew.-%, besonders bevorzugt von 30 bis 70 Gew.-%.

Der pH-Wert der erfindungsgemäß hergestellten Emulsionen beträgt vorzugsweise 3 bis 10, besonders bevorzugt 3 bis 8. Als Wasser (C) können alle Arten von Wässer eingesetzt werden, die auch bisher zur Herstellung von Dispersionen eingesetzt wurden.

Als Wasser (C) wird vorzugsweise teil- oder vollentsalztes Wasser, destilliertes oder (mehrfach) redestilliertes Wasser, Wässer für medizinische oder pharmazeutische Zwecke, wie z.B. gereinigtes Wasser (Aqua purificata gemäß Pharm. Eur.), eingesetzt.

Das erfindungsgemäß eingesetzte Wasser (C) hat vorzugsweise eine Leitfähigkeit von weniger als 50 µS/cm, besonders bevorzugt weniger als 10 µS/cm, insbesondere weniger als 1,3 µS/cm, jeweils bei 25°C und 1010 hPa.

Wasser (C) wird in Mengen von bevorzugt 10 bis 1000 Gewichtsteilen, besonders bevorzugt 40 bis 500 Gewichtsteilen, bezogen auf 100 Gewichtsteile Komponente (A) eingesetzt.

Das erfindungsgemäße Verfahren wird bei Temperaturen von vorzugsweise 0 bis 80°C, besonders bevorzugt 5 bis 60°C, insbesondere 10 bis 50°C durchgeführt.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren hat den Vorteil, dass die Produkteigenschaften, wie die Teilchengröße, besonders einfach zu steuern sind, wobei die mittlere Partikelgröße D(50) durch die Aufteilung der Anteile an Komponenten (A) bis (D), bevorzugt (B) und (C), insbesondere (C), die an den weiteren Dosierstellen zwischen den Mischelementen entlang des Mischers eingetragen werden, gesteuert wird.

Insbesondere hat das erfindungsgemäße Verfahren den Vorteil, dass Emulsionen mit mittleren Partikelgrößen größer 1 µm (D(50) Wert der Volumenverteilung) erhalten werden können.

Das erfindungsgemäße Verfahren hat den Vorteil, dass es nur geringe Druckverluste erzeugt und damit besonders energieeffizient ist.

Das erfindungsgemäße Verfahren hat den Vorteil, dass es auf breites Produktspektrum, z. B. hinsichtlich der Art und der Viskosität des Polyorganosiloxans einsetzbar ist.

Die erfindungsgemäß hergestellten Emulsionen haben den Vorteil, dass sie sehr stabil und damit lange haltbar sind.

Die erfindungsgemäß hergestellten Emulsionen haben den Vorteil, dass sie lagerstabil sind und ausgezeichnete anwendungstechnische Eigenschaften besitzen, wie z. B. eine sehr gute Wirkung als Trenn- und Gleitmittel, eine gute Benetzungsfähigkeit auf unterschiedlichen Substraten, eine gute Konditionerwirkung in Haarpflegeprodukten, d. h. deutliche Reduzierung der Nass- und Trockenkämmkraft.

Das erfindungsgemäße Verfahren hat den Vorteil, dass es hohe Raum-Zeit-Ausbeuten ermöglicht und so auf einfache und kostengünstige Art Emulsionen mit Siloxanen hergestellt werden können.

Die erfindungsgemäß hergestellten Emulsionen sind für alle Zwecke einsetzbar, für die auch bisher Emulsionen mit Polyorganosiloxanen eingesetzt worden sind, wie beispielsweise als Trennmittel, Gleitmittel, Hydrophobiermittel und zur Textilimprägnierung, bei der Verarbeitung von Gummi und Kunststoffen oder bei der Metallverarbeitung, Hydrophobiermittel für Glas und mineralische Baustoffe oder als Bestandteil von Körperpflegeprodukten.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1010 hPa, und bei Raumtemperatur, also etwa 25°C bzw, einer Temperatur, die sich beim Zusammengeben der Reaktanten bei Raumtemperatur ohne zusätzliche Heizung oder Kühlung einstellt, durchgeführt. Alle in den Beispielen angeführten Viskositätsangaben beziehen sich auf eine Temperatur von 25°C.

Die in den nachfolgenden Beispielen hergestellten Emulsionen wurden wie folgt geprüft:
Die Teilchengröße im Bereich bis zu 1000 nm wurde mit einem Partikelgrößenanalysator Zetasizer ZEN1600/ Nano-S, Fa. Malvern, Software Version 6.01 mittels dynamischer Lichtstreuung bestimmt. Dazu wurden die Emulsionen mit gefilterten und entgasten Wasser auf 0,5% verdünnt. Die angegebenen Werte beziehen sich immer auf den Wert D(50). D(50) ist der Medianwert der Volumenverteilung, wie in Basic Principles of Particle Size Analysis, Technical Paper, von Dr. Alan Rawle, Malvern Instruments Limited 2000, beschrieben.

Bei den grobteiligen Emulsionen mit Partikelgrößen größer 1µm wurde die Partikelgrößenmessung mit einem Malvern Mastersizer 2000 (Malvern Instruments GmbH D-Herrenberg; Messprinzip: Fraunhofer-Beugung entsprechend ISO 13320) durchgeführt. Als Parameter für die Messung wird ein sphärisches Modell angenommen mit einem Brechungsindex der kontinuierlichen Phase von 1,33, einem Brechungsindex der dispersen Phase von 1,39 und einer Absorption von 0,01.

Die Viskositäten der Emulsionen wurden mit einem "Brookfield programable Viskosimeter DV-II+" mit Spindel 3 bei 20°C und 20 Umdrehungen/min gemessen, der Wert wurde nach 20s abgelesen. Die Messung des pH-Wertes erfolgte entsprechend der US Pharmacopeia USP 33 bei 20°C.

### Beispiele 1 bis 13

Es wurde folgende Mischerkonfiguration verwendet (siehe Fig. 1):
6 Mischelementepaare zwischen Dosierpunkt X2 und X3 und
5 Mischelementepaare zwischen Dosierpunkt X3 und dem Produktauslass. Ein Mischelementepaar entspricht in diesen Beispielen je einem Rotor und einem Stator. Zwischen jedem Rotor- und Statorelement betrug das axiale Spaltmaß sₐₓ. jeweils 5 mm. Das radiale Spaltmaß s_{rad}. betrug 2 mm. Die Rotoren bestanden aus sternartig angeordneten Zacken auf der Welle. Jeweils 8 Zacken waren dabei an einer axialen Position auf der Welle aufgebracht und bilden somit ein Rotorelement. Die Statoren wurden jeweils durch 8 nach innen gerichtete Zacken gebildet, die an gleicher axialer Position platziert sind.

18 kg/h (Beispiel 5 9 kg/h) eines Polydimethylsiloxans mit einer Viskosität von 60.000 mPas werden am Dosierpunkt X1 in den Mischer gepumpt. Am Dosierpunk X2 wird eine wässrige Mischung aus zwei verschiedenen ethoxylierten Laurylalkoholen der Formeln C₁₂H₂₃-O-(CH₂CH₂O)₂₃-H (erhältlich unter dem Namen "BRIJ® L23" bei der Croda GmbH, D-Nettetal, HLB-Wert 16,9) und C₁₂H₂₃-O-(CH₂CH₂O)₄-H (erhältlich unter dem Namen "BRIJ® L4" bei der Croda GmbH, D-Nettetal, HLB-Wert 10,1) im Verhältnis 1:5 (durchschnittlicher HLB-Wert 11,2) und Phenoxyethanol dosiert. Die Wassermenge in der Mischung wurde variiert. Die Dosierung wurde jedoch so angepasst, dass bei allen Versuchen an der Dosierstelle X2 0,3 kg/h (Beispiel 5 0,15 kg/h) BRIJ® L23, 1,5 kg/h (Beispiel 5 0,75 kg/h) BRIJ® L4 und
0,27 kg/h (Beispiel 5 0,135 kg/h) Phenoxyethanol dosiert wurden. Am Dosierpunkt X3 wurde weiteres Wasser dosiert.

Die Aufteilung der Wasserdosierung auf die Dosierpunkte X2 und X3 und die erzielten Teilchengrößen sind in folgenden Tabellen 1 bis 3 angegeben.

**Tabelle 1: Teilchengrößen der Beispiele 1 bis 5 in Abhängigkeit von variierter Aufteilung der Wasserdosierung bei konstanter Rotorgeschwindigkeit**

| Beispiel | 1 | 2 | 3 | 4 | 5 |
|---|---|---|---|---|---|
| Wasserdosierung am X2 in kg/h | 10 | 5 | 3,5 | 2 | 2,5¹⁾ |
| Wasserdosierung am X3 in kg/h | 0 | 5 | 6,5 | 8 | 2,5¹⁾ |
| Rotorgeschwindigkeit in U/min | 600 | 600 | 600 | 600 | 600 |
| D(50) in µm | 11,80 | 8,96 | 3,19 | 1,43 | 9,80 |

| | | | | | |
|---|---|---|---|---|---|
| ¹⁾Beispiel 5: halber Gesamtdurchsatz im Vergleich zu Beispiel 2 | | | | | |

**Tabelle 2: Teilchengrößen der Beispiele 6 bis 9 in Abhängigkeit von der Rotorgeschwindigkeit bei gleicher Wasserdosierung an einer Dosierstelle**

| Beispiel | 6 | 7 | 1 | 8 | 9 |
|---|---|---|---|---|---|
| Wasserdosierung am X2 in kg/h | 10 | 10 | 10 | 10 | 10 |
| Wasserdosierung am X3 in kg/h | 0 | 0 | 0 | 0 | 0 |
| Rotorgeschwindigkeit in U/min | 150 | 300 | 600 | 1200 | 1800 |
| D(50) in µm | 36,48 | 31,40 | 11,80 | 4,04 | 3,39 |

**Tabelle 3: Teilchengrößen der Beispiele 10 bis 13 in Abhängigkeit von der Rotorgeschwindigkeit bei gleicher Aufteilung der Wasserdosierung an zwei Dosierstellen**

| Beispiel | 10 | 11 | 2 | 12 | 13 |
|---|---|---|---|---|---|
| Wasserdosierung am X2 in kg/h | 5 | 5 | 5 | 5 | 5 |
| Wasserdosierung am X3 in kg/h | 5 | 5 | 5 | 5 | 5 |
| Rotorgeschwindigkeit in U/min | 150 | 300 | 600 | 1200 | 1800 |
| D(50) in µm | 18,08 | 10,75 | 8,96 | 3,84 | 3,68 |

Es ist deutlich, dass mit dem erfindungsgemäßen Verfahren, d.h. durch die Variation der Rotorgeschwindigkeit in Kombination mit der Variation der Aufteilung der Wasserdosierung auf die Dosierpunkte X2 und X3 eine sehr gute Steuerung der Teilchengröße in einem breiten Bereich möglich ist.

### Vergleichsbeispiele

Bei diesen Beispielen wurden andere Homogenisier / Mischprinzipien getestet, um zu vergleichen, ob es überhaupt sinnvoll ist, diese in einem kontinuierlichen Prozess zu verwenden.

### Vergleichsbeispiel V1 (Rezeptur entspricht den Beispielen 1-4)

150 g Wasser, 10 g eines ethoxylierten Laurylalkohols der Formel C₁₂H₂₃-O-(CH₂CH₂O)₂₃-H (erhältlich unter dem Namen "BRIJ® L23" bei der Croda GmbH, D-Nettetal, HLB-Wert 16,), und 40 g eines ethoxylierten Laurylalkohols der Formel C₁₂H₂₃-O-(CH₂CH₂O)₄-H (erhältlich unter dem Namen "BRIJ® L4" bei der Croda GmbH, D-Nettetal, HLB-Wert 10,1) und 5 g Phenoxyethanol wurden mit einem Propellerrührer vermischt. Nach Zugabe von 600 g eines Polydimethylsiloxans mit einer Viskosität von 60.000 mPas wurden weitere 10 min gerührt. Dann wurde die Emulsion mit 195 g Wasser verdünnt und anschließend mit einem Laborhochdruckhomogenisator APV Modell 2000 (APV Homogenisers, Rannie&Gaulin, Roholmsvej 8, DK-2620 Albertslund) bei 500 bar homogenisiert.

### Vergleichsbeispiel V2 (Rezeptur entspricht den Beispielen 1-4)

30 g Wasser, 10 g eines ethoxylierten Laurylalkohols der Formel C₁₂H₂₃-O-(CH₂CH₂O)₂₃-H (erhältlich unter dem Namen "BRIJ® L23" bei der Croda GmbH, D-Nettetal, HLB-Wert 16,9) und 40 g eines ethoxylierten Laurylalkohols der Formel C₁₂H₂₃-O-(CH₂CH₂O)₄-H (erhältlich unter dem Namen "BRIJ® L4" bei der Croda GmbH, D-Nettetal, HLB-Wert 10,1) und 5 g Phenoxyethanol wurden mit einem Utra-Turrax T50 (also ein Zahnkranzdispergiergerät, das radial durchströmt wird und eine eigene Förderwirkung hat) bei 4000/min vermischt. Nach Zugabe von 600 g eines Polydimethylsiloxans mit einer Viskosität von 60.000 mPas wurden weitere 5 min homogenisiert. Dann wurde die Emulsion mit 230 g Wasser verdünnt.

### Vergleichsbeispiel V3 (Rezeptur entspricht den Beispielen 1-4; Versuch die Teilchengröße über die Wasserdosierung zu erhöhen)

300 g Wasser, 10 g eines ethoxylierten Laurylalkohols der Formel C₁₂H₂₃-O-(CH₂CH₂O)₂₃-H (erhältlich unter dem Namen "BRIJ® L23" bei der Croda GmbH, D-Nettetal, HLB-Wert 16,9) und 40 g eines ethoxylierten Laurylalkohols der Formel C₁₂H₂₃-O-(CH₂CH₂O)₄-H (erhältlich unter dem Namen "BRIJ® L4" bei der Croda GmbH, D-Nettetal, HLB-Wert 10,1) und 5 g Phenoxyethanol wurden mit ein Utra-Turrax T50 (also ein Zahnkranzdispergiergerät, das radial durchströmt wird und eine eigene Förderwirkung hat) bei 4000/min vermischt. Nach Zugabe von 600 g eines Polydimethylsiloxans mit einer Viskosität von 60.000 mPas wurden weitere 5 min homogenisiert. Dann wurde die Emulsion mit 45 g Wasser verdünnt.

Die Emulsion zeigte bereits nach kurzem Stehen deutliche Ölabscheidungen und war nicht einsetzbar.

Die Teilchengrößen und Zentrifugierstabilitäten (vom Vergleichsbeispiel V3, wo bereits Ölabscheidungen sichtbar waren wurde keine Zentrifugierstabilität bestimmt) der Vergleichsbeispiele V1 und V2 und der Beispiele 1 bis 5 sind in der nachfolgenden Tabelle dargestellt.

Die Emulsionen von Beispielen 1 bis 5 sowie die Vergleichsbeispiel V1 und V2 wurden für 8h bei 4000/min (entspricht ca. 2300 x g) zentrifugiert, wobei eine LUMiFuge® 110.2-69 (LUM GmbH Berlin) und Küvetten mit Schichtdicken von 2 mm verwendet wurden. Die Stabilität wird durch den durch die Software des Gerätes ausgegebenen Instabilitätsindex charakterisiert. Ist dieser 0, ist die Emulsion stabil, ist er 1, ist die Emulsion völlig separiert (Vgl. Dispersion Letters Technical, T4 (2013) 1-4, Update 2014).

**Tabelle 4: Teilchengrößen, Emulsionsviskositäten und Stabilitäten der Emulsionen der Beispiele 1 bis 3 sowie der Vergleichsbeispiele V1 bis V3**

| Beispiel | 1 | 2 | 3 | V1 | V2 | V3 |
|---|---|---|---|---|---|---|
| D (50) in µm | 11,80 | 8,96 | 3,19 | 10,12 | 0,51 | 9,31 |
| Viskosität in mPas | 550 | 790 | 1700 | 60 | 2560 | - |
| Instabilitätsindex | 0,194 | 0,105 | 0,027 | 0,462 | 0,04 | - |

Mit dem Hochdruckhomogenisator im Vergleichsbeispiel 1 wird eine Emulsion mit deutlich niedrigerer Viskosität und damit schlechterer Zentrifugierstabilität erhalten. Das ist darauf zurückzuführen, dass die starke Scherbelastung und die Dehnströmung im Hochdruckhomogenisator die viskositätssteigernden physikalischen Wechselwirkungen der Emulgatoren zerstört,

Mit dem Zahnkranzdispergiergerät (Vergleichsbeispiele V2 und V3) ließen sich nur dann stabile Emulsionen herstellen, wenn eine Teilchengröße von kleiner als 1µm (wie auch in US 2007/0203263 A1 beschrieben) erreicht wird. Der Versuch analog zum erfindungsgemäßen Verfahren durch Variation der Wasserdosierung größere Partikel zu erzeugen, gelang nur bedingt, da die Emulsion durch Ölabscheidungen unbrauchbar war.

Im Hinblick auf die Aufgabenstellung, ein Verfahren zu finden, mit dem ein breiter Bereich an Partikelgrößen erreicht werden kann, waren aufgrund dieser Ergebnisse Hochdruckhomogenisatoren oder Zahnkranzdispergiergeräte, also Rotor-Stator-Mischer, die radial durchströmt werden, für eine kontinuierliche Emulsionsherstellung nicht geeignet.

### Beispiele 14 bis 18

Das Verfahren von Beispiele 1 bis 13 wurde wiederholt, allerdings wurde die Mischerkonfiguration variiert.

**Tabelle 5: Teilchengrößen der Beispiele 14 bis 18 in Abhängigkeit von der Mischerkonfiguration und der Rotorgeschwindigkeit bei gleicher Aufteilung der Wasserdosierung an zwei Dosierstellen**

| Beispiel | 14 | 15 | 16 | 17 | 18 |
|---|---|---|---|---|---|
| Mischelemente vor der Dosierung X3 | 3 | 3 | 9 | 4 | 4 |
| Mischelemente nach der Dosierung X3 | 8 | 8 | 2 | 2 | 2 |
| Wasserdosierung am X2 in kg/h | 5 | 5 | 5 | 5 | 5 |
| Wasserdosierung am X3 in kg/h | 5 | 5 | 5 | 5 | 5 |
| Rotorgeschwindigkeit in U/min | 300 | 600 | 600 | 600 | 1200 |
| D (50) in µm | 12,02 | 5,02 | 9,52 | 10,50 | 3,47 |

Die Variation der Mischerkonfiguration ermöglicht ebenfalls das erfindungsgemäße Verfahren an die Bedürfnisse, wie gewünschte Teilchengröße, anzupassen.

### Beispiele 19 bis 23

### (Mischerkonfiguration wie bei Beispielen 1-13)

21 kg/h eines Polydimethylsiloxans mit einer Viskosität von 330.000 mPas werden am Dosierpunkt X1 in den Mischer gepumpt. Am Dosierpunkt X2 wird eine wässrige Mischung aus ethoxyliertem Isotridecylalkohol der Formel C₁₃H₂₇-O-(CH₂CH₂O)₅-H mit einem HLB-Wert von 11,2 (erhältlich unter dem Namen "LUTENSOL® TO5" bei der BASF SE Ludwigshafen) und einem ethoxylierten Rizinusöl mit durchschnittlich 200 Ethlenglycoleinheiten und einem HLB-Wert von 18,1 (erhältlich unter dem Namen "ETOCAS® 200" bei der Croda GmbH, D-Nettetal) im Verhältnis 1:1 und Phenoxyethanol dosiert. Die Wassermenge in der Mischung wurde variiert. Die Dosierung wurde jedoch so angepasst, dass bei allen Versuchen an der Dosierstelle X2 0,75 kg/h LUTENSOL® TO5, 0,75 kg/h ETOCAS® 200 und 0,27 kg/h Phenoxyethanol dosiert wurde. Am Dosierpunkt X3 wurde weiteres Wasser dosiert.
Die Aufteilung der Wasserdosierung auf die Dosierpunkte X2 und X3 und die erzielten Teilchengrößen sind in folgenden Tabellen angegeben.

**Tabelle 6: Teilchengrößen der Beispiele 19 bis 23 in Abhängigkeit von der Rotorgeschwindigkeit und der Aufteilung der Wasserdosierung an zwei Dosierstellen**

| Beispiel | 19 | 20 | 21 | 22 | 23 |
|---|---|---|---|---|---|
| Wasserdosierung am X2 in kg/h | 6 | 6 | 2,4 | 1,2 | 1,2 |
| Wasserdosierung am X3 in kg/h | 0 | 0 | 3,6 | 4,8 | 4,8 |
| Rotorgeschwindigkeit in U/min | 600 | 1800 | 600 | 300 | 600 |
| D (50) in µm | 13,49 | 8,61 | 3,21 | 2,58 | 2,23 |

### Beispiel 24: Herstellung einer Emulsion mit Emulsionspolymerisation (Mischerkonfiguration wie bei Beispielen 1-13)

15 kg/h eines α,ω-hydroxyterminierten Polydimethylsiloxans mit einer Viskosität von 50.000 mPas werden am Dosierpunkt X1 in den Mischer dosiert. Die Rotoren drehen sich mit 500 Umdrehungen/min. An der Dosierstelle X2 wird eine 40%ige wässrige Lösung eines ethoxylierten Laurylalkohols der Formel C₁₂H₂₃-O-(CH₂CH₂O)₂₃-H (erhältlich unter dem Namen "Brij 35" bei der Croda GmbH, D-Nettetal, HLB-Wert 16,9) mit 5,1 kg/h dosiert.
Eine 13%ige wässrige Lösung eines Octyl-Decylphosphats mit einer Säurezahl von 295 mg KOH/g (erhältlich unter dem Namen "Crodafos 810 A" bei der Croda GmbH, D-Nettetal) wird an der Dosierstelle X3 mit 7kg/h dosiert. Die aus dem Mischer in einem Tank gepumpte Emulsion (pH-Wert 1,6) wurde über einen Zeitraum von 10h gesammelt und dann weitere 48h bei 5°C gelagert und anschließend mit Triethanolamin auf einen pH-Wert von 7 eingestellt und es wurden 0,09% Konservierungsmittel auf der Basis von Methylisothiazolinon in Kombination mit Ethylhexylglycerin (erhältlich unter der Bezeichnung "Euxyl K220" bei Schülke&Mayr GmbH Norderstedt) zugesetzt.

Die Emulsion hatte eine Teilchengröße von 18 µm.

Zur Bestimmung der Ölviskosität wurden 20 g Emulsion mit 30 g Aceton versetzt, wobei sich die Emulsion trennte. Die Aceton/ Wasserphase wurde abgetrennt und der Vorgang noch einmal wiederholt. Anschließend wurde das Polymer dreimal mit Wasser gewaschen und bei 110°C unter Rühren getrocknet, bis keine Wassertröpfchen mehr zu sehen waren, und anschließend noch 8h bei 110°C im Trockenschrank nachbehandelt. Die Viskosität wurde nach DIN 53019 mit einem Kegel-Platte-Viskosimeter MCR 300 (Paar-Physika) bei 25°C und einem Schergefälle von 1/s bestimmt. Die Ölviskosität betrug 1.820.000 mPas.

### Beispiel 25: Herstellung einer Microemulsion (Mischerkonfiguration wie bei Beispielen 1-13)

9 kg/h eines Polydimethylsiloxans mit Aminoethylaminopropylgruppen und einer Viskosität von 1200 mPas und einer Aminzahl von 0,6 meq/g werden am Dosierpunkt X1 in den Mischer dosiert, Die Rotoren drehen sich mit 500 Umdrehungen/min. An der Dosierung X2 wird eine Mischung aus 10 Teilen ethoxylierten Isotridecylalkohols der Formel C₁₃H₂₅-O-(CH₂CH₂O)8-H (erhältlich unter dem Namen "Lutensol TO 8" bei der BASF SE, HLB-Wert 12,8), 5 Teilen Butyldiglycol, 0,6 Teilen Eisessig und 10 Teilen Wasser mit 10,5 kg/h dosiert.
An der Dosierstelle X3 werden 10,5 kg/h Wasser dosiert. Es wurde eine klare Microemulsion mit einer Teilchengröße D(50) von 9,8 nm erhalten.

### Beispiel 26: Herstellung einer Emulsion mit kleiner Partikelgröße (Mischerkonfiguration wie bei Beispielen 1-13)

15 kg/h eines Polydimethylsiloxans mit einer Viskosität von 60.000 mPas werden am Dosierpunkt X1 in den Mischer dosiert. Die Rotoren drehen sich mit 1200 Umdrehungen/min. An der Dosierung X2 wird eine 63%ige wässrige Lösung eines Alklypolyglcosides mit einer mittleren Alkylkettenlänge von 8,8 und einem Glucositierungsgrad von 1,7 (erhältlich unter dem Namen "GLUCOPON® 215 UP" bei der BASF SE Ludwigshafen) mit 2 kg/h dosiert. Am Dosierpunkt X3 werden 13 kg/h Wasser, dass 2% Phenoxyethanol enthält, dosiert. Die fertige Emulsion hatte eine Teilchengröße D(50) von 0,266 µm.

## Patentansprüche

1. Kontinuierliches Verfahren zur Herstellung von Emulsionen, bei dem Polyorganosiloxane (A), Emulgatoren (B), Wasser (C) und ggf. weitere Komponenten (D), die üblicherweise in Siliconemulsionen enthalten sind, kontinuierlich in einen Mischer zugeführt und darin gemischt werden, wobei eine Emulsion gebildet wird, die kontinuierlich aus dem Mischer abgeführt wird, **dadurch gekennzeichnet, dass** der Mischer ein zylindrischer Mischer ist, der mindestens zwei Rotor-Stator-Mischelemente aufweist, die axial durchströmt werden und bei dem die Rotor- und Stator-Elemente jeweils axial versetzt angeordnet sind, und der mindestens eine Dosierstelle vor den Mischelementen des Mischers und mindestens eine weitere Dosierstelle entlang des Mischers zwischen den Mischelementen enthält,
wobei die Polyorganosiloxane (A) ggf. als Vormischung mit einer Teilmenge einer Komponente ausgewählt aus Emulgatoren (B), Wasser (C), weiteren Komponenten (D) und deren Mischungen, über eine Dosierstelle am Eingang des Mischers zugeführt werden und
Emulgatoren (B) und Wasser (C) und ggf. Teilmengen von Polyorganosiloxanen (A) und ggf. weitere Komponenten (D) jeweils unabhängig voneinander, getrennt oder als Vormischung an einer Dosierstelle vor den Mischelementen und/oder an einer oder mehreren Dosierstellen zwischen den Mischelementen zugeführt werden, wobei die Zugabe der Gesamtmenge der Komponenten (A) bis (D) jeweils unabhängig voneinander über eine Dosierstelle oder verteilt über mehrere Dosierstellen erfolgt,
wobei die mittlere Partikelgröße D(50) der Emulsionen größer 1 µm beträgt und die mittlere Partikelgröße D(50) der Emulsionen durch die Aufteilung der Anteile an Komponenten (A) bis (D), vorzugsweise (B) und (C), bevorzugt (C), die an den weiteren Dosierstellen zwischen den Mischelementen entlang des Mischers eingetragen werden, gesteuert wird,
wobei die mittlere Partikelgröße sich auf den D(50) Wert der Volumenverteilung gemessen nach dem Prinzip der Fraunhofer-Beugung (entsprechend ISO 13320) bezieht und als Parameter für die Messung ein sphärisches Modell angenommen wird mit einem Brechungsindex der kontinuierlichen Phase von 1,33, einem Brechungsindex der dispersen Phase von 1,39 und einer Absorption von 0,01.

2. Kontinuierliches Verfahren nach Anspruch 1, **dadurch gekennzeichnet, dass** die Polyorganosiloxane (A) am Eingang des Mischers zugeführt werden und die Zugabe der Gesamtmenge an Emulgatoren (B) und Wasser (C) jeweils unabhängig voneinander, getrennt oder als Vormischung, an einer Dosierstelle vor den Mischelementen des Mischers oder aufgeteilt über die Dosierstellen vor und zwischen den Mischelementen des Mischers erfolgt.

3. Kontinuierliches Verfahren nach Anspruch 1 oder 2, **dadurch gekennzeichnet, dass** die Polyorganosiloxane (A) am Eingang des Mischers zugeführt werden, Emulgatoren (B) an einer Dosierstelle vor den Mischelementen zugegeben werden und die Zugabe der Gesamtmenge an Wasser an einer Dosierstelle vor den Mischelementen oder aufgeteilt über die Dosierstellen vor und zwischen den Mischelementen erfolgt.

4. Kontinuierliches Verfahren nach einem der Ansprüche 1 bis 3, **dadurch gekennzeichnet, dass** Emulgatoren (B) und Wasser (C) als Vormischung an einer Dosierstelle vor den Mischelementen zugegeben werden.

5. Kontinuierliches Verfahren nach Anspruch 4, **dadurch gekennzeichnet, dass** weiteres Wasser (C) an einer oder mehreren Dosierstellen zwischen den Mischelementen zugegeben wird.

6. Kontinuierliches Verfahren nach einem der Ansprüche 1 bis 5, **dadurch gekennzeichnet, dass** der Mischer 3 bis 60, bevorzugt 5 bis 40, Rotor-Stator-Mischelemente enthält.

7. Kontinuierliches Verfahren nach einem der Ansprüche 1 bis 6, **dadurch gekennzeichnet, dass** der Mischer 1 bis 10, bevorzugt 1 bis 5, Dosierstellen entlang des Mischers zwischen den Mischelementen aufweist.

8. Kontinuierliches Verfahren nach einem der Ansprüche 1 bis 7, **dadurch gekennzeichnet, dass** sich zwischen den Dosierstellen, sowie zwischen letzter Dosierstelle im Mischer und Mischerausgang 2 bis 10 Mischelemente, bevorzugt 2 bis 5 Mischelemente, befinden.

9. Kontinuierliches Verfahren nach einem der Ansprüche 1 bis 8, **dadurch gekennzeichnet, dass** bei den Mischelementen der axiale Spalt zwischen Rotor und Stator 0,1 bis 15 mm, bevorzugt 1 bis 5 mm, beträgt und der radiale Spalt zwischen dem Rotor der Mischelemente und dem Gehäuse des Mischers 0,1 bis 10 mm, bevorzugt 0,5 bis 5 mm beträgt.

10. Kontinuierliches Verfahren nach einem der Ansprüche 1 bis 9,**dadurch gekennzeichnet, dass** die Rotationsgeschwindigkeit der Rotoren im Mischer 10 bis 50 000 Umdrehungen/min, bevorzugt 50 bis 3 000 Umdrehungen/min, beträgt und die Umfanggeschwindigkeit der Außenseite der Rotoren 0,1 bis 30 m/s, bevorzugt 0,5 bis 15 m/s, beträgt.

11. Kontinuierliches Verfahren nach einem der Ansprüche 1 bis 10, **dadurch gekennzeichnet, dass** Emulsionen erhalten werden, die hochviskose Polyorganosiloxane mit einer Viskosität von 10 000 bis 2 000 000 mPa.s bei 25°C, gemessen nach DIN ISO 53019, enthalten.

12. Kontinuierliches Verfahren nach einem der Ansprüche 1 bis 11, **dadurch gekennzeichnet, dass** Emulsionen, die mittlere Partikelgrößen D(50) 5 bis 50 µm aufweisen, erhalten werden.

13. Kontinuierliches Verfahren nach einem der Ansprüche 1 bis 12, **dadurch gekennzeichnet, dass** mehrere Mischer in Reihe geschaltet werden.

14. Kontinuierliches Verfahren nach einem der Ansprüche 1 bis 13, **dadurch gekennzeichnet, dass** die eingesetzten Polyorganosiloxane (A) zuvor kontinuierlich hergestellt worden sind und anschließend an ihre Herstellung direkt zur Herstellung der Emulsionen weiter eingesetzt werden.

## Claims

1. Continuous process for production of emulsions which comprises polyorganosiloxanes (A), emulsifiers (B), water (C) and optionally further components (D) typically present in silicone emulsions being continuously fed into a mixer and mixed therein to form an emulsion which is withdrawn from the mixer in a continuous manner, **characterized in that**
the mixer is a cylindrical mixer which has two or more rotor-stator mixing elements for axial flow therethrough, which has the rotor and stator elements each arranged with an axial offset and which contains at least one feedpoint upstream the mixing elements of the mixer and at least one further feedpoint along the mixer between the mixing elements,
wherein the polyorganosiloxanes (A) are supplied via a feedpoint at the entry to the mixer optionally in the form of a premix with a portion of a component selected from emulsifiers (B), water (C), further components (D) and mixtures thereof, and
emulsifiers (B) and water (C) and optionally portions of polyorganosiloxanes (A) and optionally further components (D) are each supplied independently from each other, separately or as a premix at a feedpoint upstream the mixing elements and/or at one or more feedpoints between the mixing elements, wherein the admixture of the total amounts of components (A) to (D) is in each case effected independently of one another via one feedpoint or across two or more feedpoints.

2. Continuous process according to Claim 1, **characterized in that** the polyorganosiloxanes (A) are fed at the point of entry to the mixer and the admixture of the total amount of emulsifiers (B) and water (C) is effected in each case independently of each other, separately or as a premix, at a feedpoint upstream the mixing elements of the mixer or divided across the feedpoints upstream and between the mixing elements of the mixer.

3. Continuous process according to Claim 1 or 2, **characterized in that** the polyorganosiloxanes (A) are supplied at the point of entry to the mixer, emulsifiers (B) are admixed at a feedpoint upstream of the mixing elements and the admixture of the total amount of water is effected at a feedpoint upstream the mixing elements or divided across the feedpoints upstream and between the mixing elements.

4. Continuous process according to any one of Claims 1 to 3, **characterized in that** emulsifiers (B) and water (C) are admixed as a premix at a feedpoint upstream the mixing elements.

5. Continuous process according to Claim 4, **characterized in that** further water (C) is mixed at one or more feedpoints between the mixing elements.

6. Continuous process according to any one of Claims 1 to 5, **characterized in that** the mixer contains 3 to 60, preferably 5 to 40, rotor-stator mixing elements.

7. Continuous process according to any one of Claims 1 to 6, **characterized in that** the mixer has 1 to 10, preferably 1 to 5, feedpoints along the mixer between the mixing elements.

8. Continuous process according to any one of Claims 1 to 7, **characterized in that** 2 to 10 mixing elements, preferably 2 to 5 mixing elements, are situated between the feedpoints and also between the last feedpoint in the mixer and the point of outlet from the mixer.

9. Continuous process according to any one of Claims 1 to 8, **characterized in that** at the mixing elements, the axial gap between rotor and stator is 0.1 to 15 mm, preferably 1 to 5 mm, and the radial gap between the rotor of the mixing elements and the housing of the mixer is 0.1 to 10 mm, preferably 0.5 to 5 mm.

10. Continuous process according to any one of Claims 1 to 9, **characterized in that** the rotational speed of the rotors in the mixer is 10 to 50 000 revolutions/min, preferably 50 to 3000 revolutions/min, and the circumferential speed of the outside surface of the rotors is 0.1 to 30 m/s, preferably 0.5 to 15 m/s.

11. Continuous process according to any one of Claims 1 to 10, **characterized in that** the emulsions obtained contain high viscosity polyorganosiloxanes having a viscosity of 10 000 to 2 000 000 mPa.s at 25°C, as measured to DIN ISO 53019.

12. Continuous process according to any one of Claims 1 to 11, **characterized in that** the emulsions obtained have central particle sizes D(50) greater than 1 µm, preferably 5 to 50 µm.

13. Continuous process according to any one of Claims 1 to 12, **characterized in that** two or more mixers are connected in series.

14. Continuous process according to any one of Claims 1 to 13, **characterized in that** the (A) polyorganosiloxanes used are produced in a continuous manner beforehand and then in their as-obtained state further used directly for producing the emulsions.

## Revendications

1. Procédé continu de fabrication d'émulsions, selon lequel des polyorganosiloxanes (A), des émulsifiants (B), de l'eau (C) et éventuellement d'autres composants (D) qui sont généralement contenus dans des émulsions de silicone sont introduits en continu dans un mélangeur et mélangés dans celui-ci, une émulsion étant formée, qui est déchargée en continu du mélangeur, **caractérisé en ce que**
le mélangeur est un mélangeur cylindrique qui comprend au moins deux éléments de mélange à rotor-stator, qui sont traversés axialement et dans lequel les éléments rotor et stator sont chacun agencés en décalage axial, et qui contient au moins un emplacement d'ajout avant les éléments de mélange du mélangeur et au moins un autre emplacement d'ajout le long du mélangeur entre les éléments de mélange,
les polyorganosiloxanes (A) étant introduits, éventuellement sous la forme d'un pré-mélange avec une partie d'un composant choisi parmi les émulsifiants (B), l'eau (C), les composants supplémentaires (D) et leurs mélanges, à un emplacement d'ajout à l'entrée du mélangeur, et
les émulsifiants (B) et l'eau (C) et éventuellement des parties des polyorganosiloxanes (A) et éventuellement des composants supplémentaires (D) étant introduits chacun indépendamment les uns des autres, séparément ou sous la forme d'un pré-mélange, à un emplacement d'ajout avant les éléments de mélange et/ou à un ou plusieurs emplacements d'ajout entre les éléments de mélange, l'ajout de la quantité totale des composants (A) à (D) chacun indépendamment les uns des autres ayant lieu à un emplacement d'ajout ou réparti sur plusieurs emplacements d'ajout,
la taille de particule moyenne D(50) des émulsions étant supérieure à 1 µm, et la taille de particule moyenne D(50) des émulsions étant ajustée par la répartition des proportions des composants (A) à (D), de préférence (B) et (C), de préférence (C), qui sont introduites aux autres emplacements d'ajout entre les éléments de mélange le long du mélangeur,
la taille de particule moyenne se rapportant à la valeur D(50) de la distribution volumique mesurée selon le principe de la diffraction de Fraunhofer (selon ISO 13320), et un modèle sphérique étant adopté en tant que paramètre pour la mesure, avec un indice de réfraction de la phase continue de 1,33, un indice de réfraction de la phase dispersée de 1,39 et une absorption de 0,01.

2. Procédé continu selon la revendication 1, **caractérisé en ce que** les polyorganosiloxanes (A) sont introduits à l'entrée du mélangeur, et l'ajout de la quantité totale des émulsifiants (B) et de l'eau (C) chacun indépendamment les uns des autres, séparément ou sous la forme d'un pré-mélange, a lieu à un emplacement d'ajout avant les éléments de mélange du mélangeur ou réparti sur les emplacements d'ajout avant et entre les éléments de mélange du mélangeur.

3. Procédé continu selon la revendication 1 ou 2, **caractérisé en ce que** les polyorganosiloxanes (A) sont introduits à l'entrée du mélangeur, les émulsifiants (B) sont ajoutés à un emplacement d'ajout avant les éléments de mélange, et l'ajout de la quantité totale de l'eau a lieu à un emplacement d'ajout avant les éléments de mélange ou réparti sur les emplacements d'ajout avant et entre les éléments de mélange.

4. Procédé continu selon l'une quelconque des revendications 1 à 3, **caractérisé en ce que** les émulsifiants (B) et l'eau (C) sont ajoutés sous la forme d'un pré-mélange à un emplacement d'ajout avant les éléments de mélange.

5. Procédé continu selon la revendication 4, **caractérisé en ce que** de l'eau supplémentaire (C) est ajoutée à un ou plusieurs emplacements d'ajout entre les éléments de mélange.

6. Procédé continu selon l'une quelconque des revendications 1 à 5, **caractérisé en ce que** le mélangeur contient 3 à 60, de préférence 5 à 40, éléments de mélange à rotor-stator.

7. Procédé continu selon l'une quelconque des revendications 1 à 6, **caractérisé en ce que** le mélangeur comprend 1 à 10, de préférence 1 à 5, emplacements d'ajout le long du mélangeur entre les éléments de mélange.

8. Procédé continu selon l'une quelconque des revendications 1 à 7, **caractérisé en ce que** 2 à 10 éléments de mélange, de préférence 2 à 5 éléments de mélange, se trouvent entre les emplacements d'ajout, ainsi qu'entre le dernier emplacement d'ajout dans le mélangeur et la sortie du mélangeur.

9. Procédé continu selon l'une quelconque des revendications 1 à 8, **caractérisé en ce que** la fente axiale entre le rotor et le stator dans les éléments de mélange est de 0,1 à 15 mm, de préférence de 1 à 5 mm, et la fente radiale entre le rotor des éléments de mélange et le boîtier du mélangeur est de 0,1 à 10 mm, de préférence de 0,5 à 5 mm.

10. Procédé continu selon l'une quelconque des revendications 1 à 9, **caractérisé en ce que** la vitesse de rotation des rotors dans le mélangeur est de 10 à 50 000 tours/minute, de préférence de 50 à 3 000 tours/minute, et la vitesse périphérique du côté extérieur des rotors est de 0,1 à 30 m/s, de préférence de 0,5 à 15 m/s.

11. Procédé continu selon l'une quelconque des revendications 1 à 10, **caractérisé en ce que** des émulsions sont obtenues, qui contiennent des polyorganosiloxanes hautement visqueux d'une viscosité de 10 000 à 2 000 000 mPa.s à 25 °C, mesurée selon DIN ISO 53019.

12. Procédé continu selon l'une quelconque des revendications 1 à 11, **caractérisé en ce que** des émulsions qui présentent des tailles de particules moyennes D(50) de 5 à 50 µm sont obtenues.

13. Procédé continu selon l'une quelconque des revendications 1 à 12, **caractérisé en ce que** plusieurs mélangeurs sont raccordés en série.

14. Procédé continu selon l'une quelconque des revendications 1 à 13, **caractérisé en ce que** les polyorganosiloxanes (A) utilisés ont été fabriqués en continu auparavant, et sont utilisés directement après leur fabrication pour la fabrication des émulsions.
